**Europäisches Patentamt**

(19) **European Patent Office**

**Office européen des brevets**

(11) Veröffentlichungsnummer: **0 041 225**

**A1**

(12) # EUROPÄISCHE PATENTANMELDUNG

(21) Anmeldenummer: **81104058.3**

(22) Anmeldetag: **27.05.81**

(51) Int. Cl.³: **F 04 B 33/00**

(30) Priorität: **30.05.80 DE 3020534**

(43) Veröffentlichungstag der Anmeldung:
**09.12.81 Patentblatt 81/49**

(84) Benannte Vertragsstaaten:
**AT BE CH DE FR GB IT LI LU NL SE**

(71) Anmelder: **Backenköhler, Willi**
**Hunoldstrasse 5**
**D-2906 Wardenburg-Hundsmühlen(DE)**

(72) Erfinder: **Backenköhler, Willi**
**Hunoldstrasse 5**
**D-2906 Wardenburg-Hundsmühlen(DE)**

(74) Vertreter: **Munk, Ludwig, Dipl.-Ing.**
**Prinzregentenstrasse 1**
**D-8900 Augsburg(DE)**

(54) **Haushalt-Evakuiervorrichtung.**

(57) Eine Haushalt-Evakuiervorrichtung für eine verschließbare Absaugöffnung (25) aufweisende Nahrungsmittelbehälter mit einer wahlweise mit der von einem Rückschlagventil (24) beherrschten Absaugöffnung (25) verbindbaren Vakuumpumpe (1) wird dadurch hinsichtlich ihrer Handhabung, ihrer Arbeits - und Funktionssicherheit, ihrer Wartungs- und Bedienungsfreundlichkeit sowie ihrer Verwendungsmöglichkeiten verbessert, daß die Vakuumpumpe (1) als Kolbenpumpe mit einem einen Saugstutzen (20) aufweisenden Zylinder (2) und einem an einer mit einem Handgriff (6) versehenen Kolbenstange (4) befestigten Kolben (3) ausgebildet ist, der eine von einem im Gegentakt zu dem die Absaugöffnung (25) kontrollierenden Rückschlagventil (24) öffnenden bzw. schließenden Rückschlagventil (14) kontrollierte Durchgangsöffnung (13) aufweist, die eine den Saugstutzen (20) aufweisende Zylinderkammer (15) mit einer mindestens eine Ausblasöffnung (17) aufweisenden Zylinderkammer (16) verbindet.

FIG 1

EP 0 041 225 A1

Croydon Printing Company Ltd.

## Haushalt-Evakuiervorrichtung

Die Erfindung betrifft eine Haushalt-Evakuiervorrichtung für eine verschließbare Absaugöffnung aufweisende Nahrungsmittelbehälter mit einer wahlweise mit der von einem Rückschlagventil beherrschten Absaugöffnung des jeweils zu evakuierenden Behälters verbindbaren Vakuumpumpe.

Eine Vorrichtung dieser Art ist aus der DE-OS 27 50 791 bekannt. Diese Vorveröffentlichung bringt jedoch eine als Rotationskolbenpumpe ausgebildete Vakuumpumpe in Vorschlag, die mit Hilfe einer mit einem zugänglichen Wellenstummel bzw. Werkzeug versehenen Haushaltsmaschine, im konkreten Fall mit Hilfe einer mit einem Schlägermahlwerk versehenen Kaffeemühle, angetrieben werden soll. Ein derartiger Antrieb der Rotationskolbenpumpe erweist sich jedoch nicht als zuverlässig genug und birgt eine hohe Verletzungsgefahr. Der bekannte Vorschlag erweist sich daher als hohes Sicherheitsrisiko. Außerdem ist der mittels einer Rotationskolbenpumpe erzielbare Unterdruck begrenzt, so daß nur eine beschränkte Evakuierung stattfindet, was sich negativ auf die erwünschte Keimfreimachung und Haltbarkeit auswirkt. Ganz abgesehen davon erfordert eine Rotationskolbenpumpe aber auch einen nicht unerheblichen baulichen Aufwand und eine ordnungsgemäße Wartung und erweist sich zudem in der Handhabung vielfach für Haushaltszwecke als zu kompliziert.

In der DE-OS 27 50 791 wird zwar in anderem Zusammenhang auch auf Handvakuumpumpen verwiesen, ohne daß jedoch hierzu nähere Angaben gemacht werden. Die derzeit im Haushalt gebräuchlichen Handvakuumpumpen bestehen aus einem Federbalg, der von Hand zusammengedrückt und aufgrund seiner inneren Vorspannung aufgefaltet wird, wobei Luft eingesaugt wird. Der so erzielbare Unterdruck ist hierbei jedoch proportional zur inneren Vorspannung des Federbalgs. Die Erfahrung hat gezeigt, daß das mit Anordnungen dieser Art erzielbare Vakuum für eine zuverlässige Konservierung und Keimfreimachung nicht ausreicht.

Hiervon ausgehend ist es daher die Aufgabe der vorliegenden Erfindung eine Vorrichtung eingangs erwähnter Art mit einfachen und kostengünstigen Mitteln so zu verbessern, daß nicht nur eine einfache Handhabung und hohe Arbeitssicherheit sowie hohe Wartungs- und Bedienungsfreundlichkeit gewährleistet sind, sondern gleichzeitig auch ein hohes Vakuum erreichbar ist und dennoch eine möglichst universelle Verwendbarkeit sichergestellt ist.

Die Lösung dieser Aufgabe gelingt gemäß der Erfindung in überraschend einfacher Weise dadurch, daß die Vakuumpumpe als Kolbenpumpe mit einem einen Saugstutzen aufweisenden Zylinder und einem an einer mit einem Handgriff versehenen Kolbenstange befestigten Kolben ausgebildet ist, der eine von einem im Gegentakt zu dem die Absaugöffnung kontrollierenden Rückschlagventil öffnenden bzw. schließenden Rückschlagventil kontrollierte Durchgangsöffnung aufweist, die eine den Saugstutzen aufweisende Zylinderkammer mit einer mindestens eine Ausblasöffnung aufweisenden Zylinderkammer verbindet.

Die Verwendung einer von Hand bedienbaren Kolbenpumpe gewährleistet einen einfachen Aufbau, eine sinnfällige Bedienung sowie eine hohe Unempfindlichkeit auch bei robusten Betriebsverhältnissen und ungeübter bzw. falscher Bedienung und erweist sich daher als höchst wirtschaftlich. Die erfindungsgemäßen Maßnahmen ermöglichen ferner mehrere aufeinanderfolgende Arbeitstakte ohne die Vakuumpumpe vom zu evakuierenden Behälter abnehmen zu müssen, wobei die mit einem Handgriff versehene Kolbenstange in vorteilhafter Weise in beiden Richtungen einfach mit der erforderlichen Kraft verschoben werden kann, so daß ein Vakuum bisher nicht für möglich gehaltener Stärke erzielbar ist, was sich positiv auf die erzielbare Keimfreimachung und Konservierung auswirkt. Die als separates Bauteil ausgebildete Kolbenpumpe ist zudem vielfach verwendbar und mit ihrem Saugstutzen an unterschiedliche Behälter ansetzbar. Diese sind lediglich mit einer geeigneten, dem Saugstutzen zugeordneten Muffe zu versehen, welche zweckmäßig das die Absaugöffnung beherrschende Rückschlagventil aufnehmen kann.

Aus der DE-Gbm-Schrift 1 932 470 ist zwar eine Haushalt-Evakuiervorrichtung mit einer Kolbenpumpe bekannt. Die Kolbenpumpe ist hierbei jedoch zusammen mit dem die Absaugöffnung beherrschenden Rückschlagventil in den Behälterdeckel integriert und daher nicht abnehmbar, so daß pro Behälter eine komplette Pumpe benötigt wird, was einen nicht unerheblichen Aufwand bedeutet. Außerdem wird hierdurch ein nicht unerheblicher Raumbedarf verursacht, der das zur Verfügung stehende Nutzvolumen schmälert. Ganz abgesehen davon ist jedoch bei der bekannten Anordnung das Volumen der mit der in den Behälterdeckel integrierten Kolbenpumpe absaugbaren Luft durch das einmalige Aufnahmevermögen des Pumpenzylinders beschränkt, was sich negativ auf die erzielbare Evakuierung und damit die erzielbare Konservierung auswirkt.

Eine vorteilhafte Ausgestaltung der übergeordneten Maßnahmen kann darin bestehen, daß die Ausblasöffnung, die vorzugsweise als Drosselstelle ausgebildet sein kann, im Bereich der dem Saugstutzen gegenüberliegenden, von der Kolbenstange durchsetzten Zylinderstirnwand angeordnet ist, so daß der Kolben beim Saughub praktisch bis zu seinem Anschlag an der Zylinderstirnwand gefahren werden kann, was eine vollständige Ausnutzung des zur Verfügung stehenden Zylinderraums gewährleistet. In diesem Sinne kann es sich auch positiv auswirken, den Kolben saugstutzenseitig mit einer in der saugstutzenseitigen Endlage des Kolbens mit geringem Spiel in den Saugstutzen eintauchenden Ansatz zu versehen, so daß sich praktisch kein Totraum ergibt.

In weiterer bevorzugter Fortbildung der übergeordneten Maßnahmen kann der Kolben einen die vorzugsweise exzentrisch angeordnete Durchgangsöffnung aufweisenden Scheibenkörper aufweisen, der gegenüber der Zylinderwandung Spiel besitzt und auf dem ein mit Perforationen versehener Teller randnah abgestützt ist, mittels dessen Rand

- 5 -

ein umlaufender Dichtring gesichert ist und dessen gewölbter Boden von der Kolbenstange durchsetzt und mittels einer auf diese aufgeschraubten, nachstellbaren Mutter in Richtung des den Tellerrand abstützenden Scheibenkörpers beaufschlagbar ist. Diese bevorzugte Weiterbildung ergibt ersichtlich einen höchst einfachen Kolbenaufbau und gewährleistet dennoch eine exakte Kolbenabdichtung, was sich vorteilhaft auf das erzielbare Vakuum auswirkt. Der im Bereich des Dichtrings nicht zu vermeidende Verschleiß bzw. eine im Laufe längerer Betriebszeiten auftretende Ermüdung können hierbei in vorteilhafter Weise einfach durch Nachstellen der Tellerspannung ausgeglichen werden. Diese Maßnahmen gewährleisten somit eine hohe Funktionssicherheit bei langer Lebensdauer. Die Kolbenteile können dabei einfach als Spritzgußformlinge aus Kunststoff hergestellt werden.

Eine weitere vorteilhafte Ausgestaltung der übergeordneten Maßnahmen kann darin bestehen, daß die Rückschlagventile als Klappenventile mit jeweils einer zungenförmigen Ventilklappe ausgebildet sind, die im Bereich des oberen Rands der Durchgangsöffnung bzw. Absaugöffnung angeordnet ist. Die Ventilklappen können dabei einfach als in eine den oberen Rand der Durchgangsöffnung bzw. Absaugöffnung umgebende Platte aus elastischem Material eingeschnittene, zungenförmige Lasche ausgebildet sein, was vorteilhaft durch einen einfachen Stanzschnitt erzielbar ist. Zur Verstärkung der Rückstellkraft können die zungenförmigen Ventilklappen jeweils mit einer als eingesetzte Blattfeder ausgebildeten Rückstellfeder versehen sein.

Zur Erhöhung der Dichtwirkung können die Ventilklappen jeweils mit einem der vorzugsweise konisch ausgebildeten Durchgangs- bzw. Absaugöffnung zugeordneten Zapfen versehen sein.

Eine weitere vorteilhafte Maßnahme kennzeichnet sich durch eine dem die Absaugöffnung kontrollierenden Rückschlagventil zugeordnete Muffe zur wahlweisen Aufnahme des Saugstutzens. Eine derartige Muffe kann einfach als separates Bauteil ausgebildet sein und somit auf jeden beliebigen Behälterdeckel aufgesetzt werden. Hierdurch wird der Hausfrau bzw. dem Hausmann eine einfache Möglichkeit an die Hand gegeben, im Haushalt vorhandene Behälter, wie z. B. Altglas, das mit einem Schraubdeckel versehen ist, zur Vakuumverpackung weiter zu verwenden. Es ist hierbei lediglich ein Loch in den Deckel zu schlagen bzw. zu bohren und die erwähnte, mit einem Rückschlagventil bestückte Muffe aufzukleben. Die Muffenstirnseite bietet dabei eine geeignete Ansatzfläche. Die Muffe kann zweckmäßig mit einem Innengewinde versehen sein, in das der mit einem Außengewinde versehene Saugstutzen einschraubbar ist, so daß die Bedienungsperson praktisch beide Hände zur Betätigung der Vakuumpumpe frei hat.

Eine weitere zweckmäßige Maßnahme kann darin bestehen, daß die Muffe nach Abnahme des Saugstutzens durch einen in ihren Mantel einschraubbaren Gewindestöpsel verschließbar ist, der die Ventilklappe somit zuverlässig in ihrer Schließstellung hält. Der Gewindestöpsel kann vorteilhaft mit einer angeformten Grifflasche versehen sein, so daß zusätzliche Werkzeuge nicht benötigt werden.

Eine andere Ausgestaltung des den vorstehend geschilderten Maßnahmen zugrunde liegenden übergeordneten Gedanks kann darin bestehen, daß die Muffe in den Behälterdeckel eingeformt ist, so daß sich bei der Stapelung mehrerer Behälter keine Schwierigkeiten ergeben. Diese Maßnahme kommt vor allem da in Frage, wo neue Behälter bzw. Behälterdeckel zum Einsatz kommen. Zur Evakuierung von Beuteln oder
dergleichen kann eine mit einer an die das Rückschlagventil aufweisende Stirnwand angesetzten Tülle versehene Muffe vorgesehen sein.

Weitere zweckmäßige Ausgestaltungen und vorteilhafte
Weiterbildungen der übergeordneten Maßnahmen ergeben
sich aus der nachstehenden Beschreibung einiger Ausführungsbeispiele anhand der Zeichnung in Verbindung
mit den restlichen Unteransprüchen.

In der Zeichnung zeigen:

Figur 1     einen Längsschnitt durch eine Vakuumpumpe
            mit einer zugeordneten, auf einen Behälter-
            deckel aufgeklebten Ventilmuffe in Explo-
            sionsdarstellung,

Figur 2     einen Schnitt durch einen Behälterdeckel mit
            eingeformter Ventilmuffe und zugeordnetem
            Gewindestöpsel ebenfalls in Explosionsdarstellung,

Figur 3     einen Schnitt durch eine mit einer Tülle versehene Ventilmuffe,

Figur 4     eine Draufsicht auf eine vorteilhafte Ventilausführung,

Figur 5     ein Beispiel für eine in sich bewegliche Ver-
            bindungsleitung zwischen Vakuumpumpe und Ab-
            saugöffnung und

Figur 6     einen Schnitt durch einen universell verwend-
            baren Behälterdeckel.

- 8 -

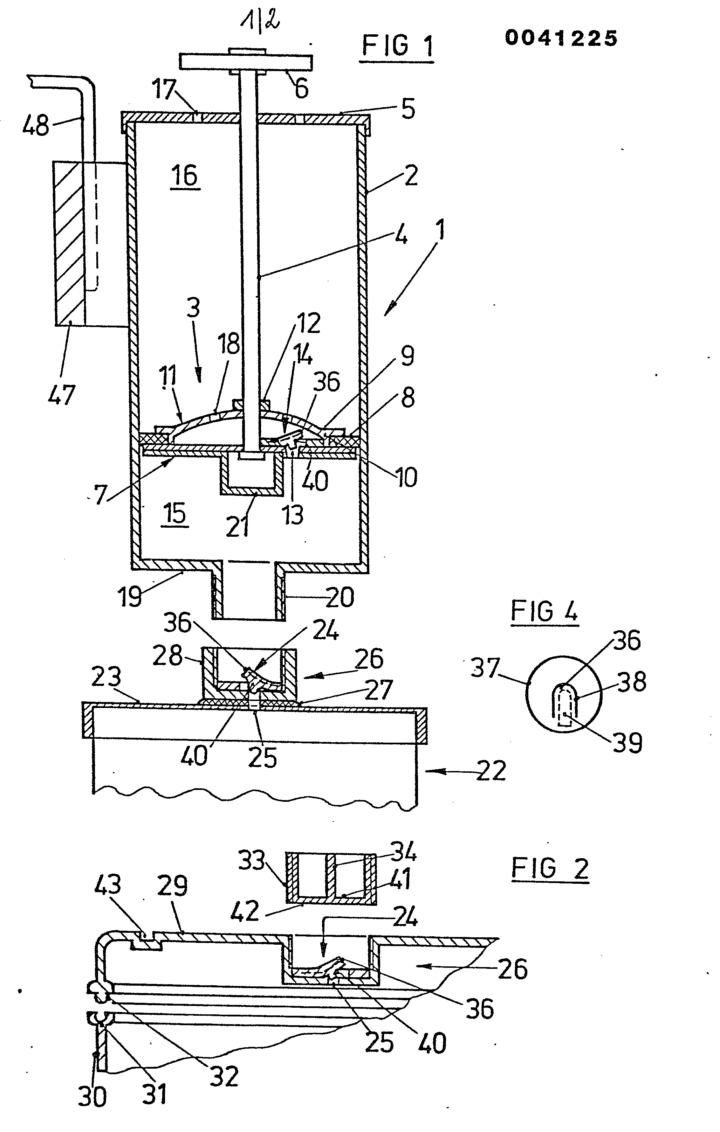

Die in Figur 1 dargestellte und als Ganzes mit 1
bezeichnete Vakuumpumpe besteht aus einem Zylinder
2 in dem ein als Ganzes mit 3 bezeichneter Kolben
hin und her verschiebbar angeordnet ist. Der Kolben 3 ist an einer Kolbenstange 4 befestigt, welche die rückwärtige, hier die obere Stirnwand 5
des Zylinders 2 durchsetzt und an ihrem freien Ende mit einem hier einfach durch einen aufgesetzten Knopf gebildeten Handgriff 6 versehen ist. Der Kolben 3 kann einteilig ausgebildet und mit radialem Dichtsitz in den Zylinder 2 eingepaßt sein. Im dargestellten Ausführungsbeispiel ist ein mehrteiliger Kolben vorgesehen, der einen
an der Kolbenstange 4 befestigten Scheibenkörper 7 aufweist, der gegenüber dem Innendurchmesser des Zylinders 2
radiales Spiel besetzt. Zur Abdichtung des Kolbens 3 gegenüber dem Zylinder 2 ist ein umlaufender Dichtring 8
vorgesehen, der durch einen auf dem Scheibenkörper 7 abgestützten Teller 9 gesichert ist. Hierzu ist der Teller
9 randseitig einfach mit einem auf dem Scheibenkörper 7
aufliegenden Bund 10 versehen, in welchen der umlaufende
Dichtring 8 eingelegt ist. Der Teller 9 ist mit einem gewölbten Boden 11 versehen, der von der Kolbenstange 4
durchsetzt ist und zweckmäßig unter Vorspannung an einer
auf die Kolbenstange 4 aufgeschraubten Mutter 12 anliegt.
Durch Nachstellen der Schraube 12 wird bewirkt, daß der
Tellerboden 11 abflacht und damit der Dichtring 8 stärker
nach außen gedrückt wird, womit ein Verschleißausgleich
gewährleistet ist und somit über lange Betriebszeiten
hinweg die Erzielung eines hohen Unterdrucks sichergestellt ist.

Zur Erzielung einer großen Unabhängigkeit hinsichtlich
der absaugbaren Luftmenge und damit hinsichtlich der bedienbaren Behältergröße ist der Kolben 3 mit einer Durchlaßöffnung 13 versehen, die von einem Rückschlagventil 14
beherrscht wird, das während des hier nach oben gehenden
Saughubs des Kolbens 3 geschlossen und während des nach
unten gehenden Ausstoßhubs des Kolbens 3 geöffnet ist.
Bei dem nach unten gehenden Ausstoßhub des Kolbens 3 gelangt somit die während des Saughubs angesaugte Luft von
der saugseitigen Zylinderkammer 15 in die jenseits des
Kolbens 3 liegende Zylinderkammer 16 und wird beim anschließenden, nach oben gehenden Saughub aus dieser verdrängt. Hierzu ist die Zylinderstirnwand 5 mit Ausblasöffnungen 17 versehen, die zweckmäßig als einfache Drosselbohrung ausgebildet sein können. Der im dargestellten Ausführungsbeispiel den die Durchlaßöffnung 13 aufweisenden Scheibenkörper 7 abdeckende Teller 9 ist hier zweckmäßig mit entsprechenden Perforationen 18 versehen.

Der Zylinder 2 ist im Bereich seiner saugseitigen Stirnwand 19 mit einem hier koaxial zur Zylinderachse angeordneten Saugstutzen 20 versehen, dem kolbenseitig ein Ansatz 21 zugeordnet ist, der in der unteren Endstellung. des Kolbens mit Spiel in den genannten Saugstutzen 20 eintaucht, um Totraum möglichst auszuschalten. Der Ansatz 21 ist an den Scheibenkörper 7 einfach angesetzt. Hierzu kann dieser einfach aus zwei aufeinanderliegenden Scheiben bestehen, wobei an die eine Scheibe der Ansatz 21 so angeformt ist, daß er das die andere Scheibe durchsetzende und diese abstützende Ende der Kolbenstange 4 umgreift.

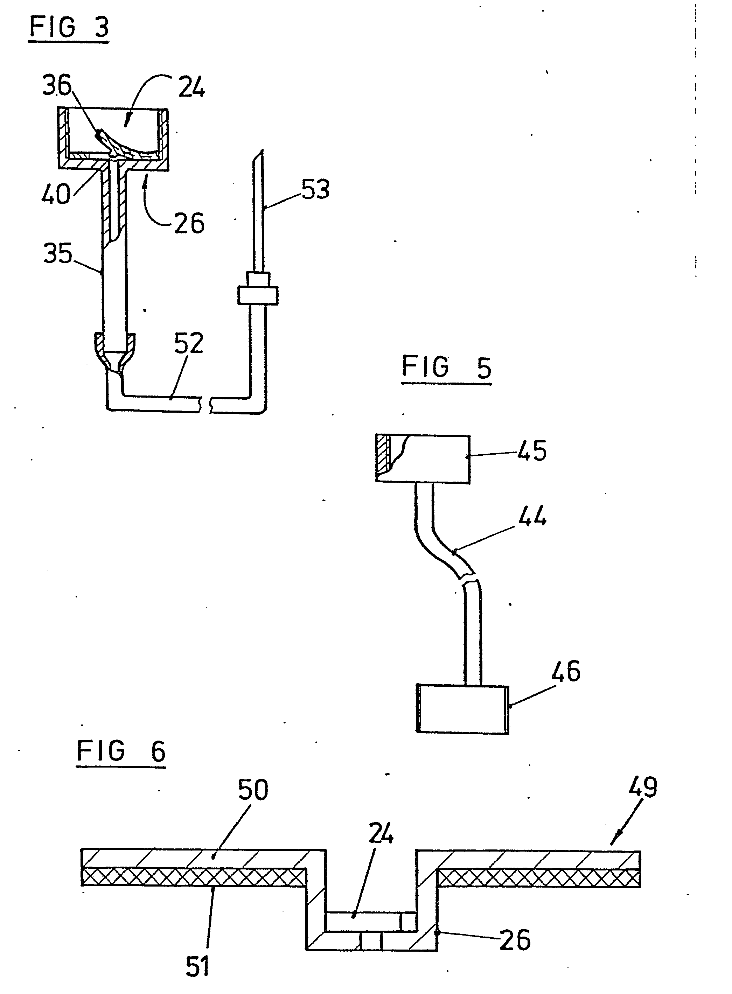

Die Vakuumpumpe 1 ist mit ihrem Saugstutzen 20 an den zu evakuierenden, als Ganzes mit 22 bezeichneten Behälter ansetzbar, dessen Deckel 23 mit einer von einem Rückschlagventil 24 beherrschten Absaugöffnung 25 versehen ist. Zur Aufnahme des Rückschlagventils 24 und des Saugstutzens 20 ist eine stirnseitig entsprechend der Absaugöffnung 25 gelochte Muffe 26 vorgesehen, die hier einfach mittels eines Klebstreifens 27 so auf den Deckel 23 aufgeklebt sein kann, daß sich eine durchgehende Absaugöffnung ergibt, die von dem muffenseitig vorgesehenen Rückschlagventil 24 beherrschbar ist. Bei einer Ausführung dieser Art mit aufgeklebter Muffe 26 ist es möglich, praktisch jeden beliebigen Behälter zu evakuieren. Es ist lediglich deckelseitig eine geeignete Absaugöffnung 25 anzubringen und die Muffe 26 aufzusetzen. Die Muffe 26 wird daher in entsprechender Anzahl benötigt, was eine rationelle Herstellung ermöglicht. Der Saugstutzen 20 wird zweckmäßig in die Muffe eingeschraubt. Hierzu ist der Saugstutzen 20 zweckmäßig mit einem Außengewinde versehen, das zum Eingriff mit einem im Bereich des Mantels 28 der Muffe 26 vorgesehenen Innengewinde gebracht werden kann. Zur Erleichterung der Handhabung kann es in manchen Fällen zweckmäßig sein, den Saugstutzen 20 der Vakuumpumpe 1 nicht direkt an die deckelseitige Muffe 26 anzusetzen, sondern dazwischen eine bewegliche Verbindungsleitung der in Figur 5 dargestellten Art vorzusehen. Bei dem in Figur 5 dargestellten Ausführungsbeispiel ist eine als Schlauchabschnitt ausgebildete Verbindungsleitung 44 vorgesehen, die einerseits an eine am Saugstutzen 20 festlegbare Überwurfkappe 45 und andererseits an ein in die deckelseitige Muffe 26 einsetzbares Einsatzstück 46 angeformt ist. Es wäre aber auch denkbar, den die Verbindungsleitung 44 bildenden Schlauchabschnitt einfach auf entsprechende Anschlußstutzen der Überwurfkappe 45 bzw. des Einsatzstücks 46 aufzustecken und evtl. hieran durch eine Klebverbindung festzulegen. Die Verwendung der beweglichen Verbindungsleitung 44 stellt sicher, daß die zugeordnete Vakuumpumpe 1 etwa an der Tischplatte des die zu evakuierenden Gefäße aufnehmenden Tisches stationär festgelegt sein kann. Hierzu kann die Vakuumpumpe 1 mit einer an ihren Zylinder 2 angeformten Befestigungsklaue versehen sein. Bei dem in Figur 1 dargestellten Ausführungsbeispiel ist hierzu eine an den Zylinder 2 angeformte Öse 47 vorgesehen, in welche der Haltearm einer an sich bekannten Befestigungsklammer 48 eingreifen kann.

In Fällen, in denen keine Verwendung von Altbehältern beabsichtigt ist, was der Figur 2 zugrunde liegt, kann die mit dem die Absaugöffnung 25 beherrschenden Rückschlagventil 24 bestückte Muffe 26 einfach in einen entsprechenden Behälterdeckel 29 eingeformt sein. Bei dem der Figur 2 zugrunde liegenden Behälter handelt es sich um eine durch den Deckel 29 luftdicht verschließbare Dose 30, deren oberer Rand mit einer hinterschnittenen Umlaufnut 31 versehen ist, in welche ein umlaufender Dichtungswulst 32 des aufsetzbaren Deckels 29 einrastbar ist, was vorteilhaft einen einfachen Schnappverschluß ergibt. Die Umlaufnut 31 befindet sich zweckmäßig genau oberhalb des Dosenmantels. Dasselbe gilt zweckmäßig für den Dichtungswulst 32 bezüglich des Deckelmantels. Diese Maßnahmen gewährleisten eine ausgezeichnete Stabilität, was den Rastvorgang erleichtert. Die in den Deckel 29 eingeformte Muffe 26 ist hier einfach als entsprechende Deckelvertiefung ausgebildet, was in vorteilhafter Weise sicherstellt, daß die Muffe 26 bei der Aufeinanderstapelung mehrerer Behälter sich nicht störend auswirken kann.

Der in Figur 6 dargestellte Deckel ist für alle Gefäße, die einen ebenen Einfüllrand besitzen, universell verwendbar. Der Deckel 49 besteht hierzu einfach aus einem ebenen, scheibenförmigen Tragkörper 50, in den zentral die Muffe 26 mit dem Rückschlagventil 24 eingeformt ist und dessen Unterseite außerhalb der Muffe 26 mit einer Beschichtung 51 aus weichem Dichtungsmaterial, evtl. aus Weichgummi oder dergleichen versehen ist. Dieser Deckel 49 kann auf jeden ebenen

- 13 -

Gefäßrand aufgelegt werden, dessen Durchmesser kleiner als der Deckeldurchmesser ist. Der zum Abdecken des Gefäßrands nicht benötigte Deckelbereich steht hierüber einfach vor. Die über die gesamte Deckelunterseite außerhalb der Muffe 26 sich erstreckende weiche Beschichtung 51 stellt sicher, daß sich der Deckel 49 in jeder Lage auf dem Gefäßrand festsaugt, sobald der Gefäßinnenraum mit Hilfe der Vakuumpumpe 1 evakuiert wird. Zum Abnehmen des Deckels 49 wird der Gefäßinnenraum, wie bei den anderen Ausführungsbeispielen gemäß Figuren 1 bis 5 einfach durch Abheben des Rückschlagventils belüftet.

In jedem Falle ist es zweckmäßig, in die Muffe 26 nach Abnahme der Vakuumpumpe 1 einen Stöpsel der in Figur 2 bei 33 angedeuteten Art einzusetzen. Der Stöpsel 33 ist im dargestellten Ausführungsbeispiel als Gewindestöpsel ausgebildet, der mit einer Grifflasche 34 versehen ist. Sofern die Grifflasche 34 in der eingesetzten Stellung den oberen Rand der Muffe 26 überragt, kann zweckmäßig der Boden der Dose 30 mit einer entsprechenden Einziehung versehen sein, so daß mehrere Dosen übereinander gestapelt werden können, wobei die Grifflasche 34 gleichzeitig eine Sicherung gegen seitliches Verrutschen bietet. Im dargestellten Ausführungsbeispiel ist der Stöpsel 33 als oben offener Hohlkörper ausgebildet, wobei die Grifflasche 34 zweckmäßig als mit dem oberen Stöpselrand abschließender Steg ausgebildet ist, was eine ausgezeichnete Versteifung ergibt und eine einfache Stapelung bei ebenem Behälterboden ermöglicht. Vielfach kann es unter diesem Gesichtspunkt zweckmäßig sein, zwei als Kreuzsteg ausgebildete Grifflaschen vorzusehen. Der Boden 41 des Stöpsels 33 ist zweckmäßig gewölbt und mit Entlüfungslöchern 42 versehen, so daß beim Einschrauben ein Luftstau sicher vermieden und demnach die Ventilklappe 36 zuverlässig in Schließstellung gehalten wird. Zur Bewerkstelligung einer Verrutschsicherung beim Stapeln mehrerer Behälter kann es vielfach vorteilhaft sein, den Behälterboden mit Rastvorsprüngen, zweckmäßig in Form eines umlaufenden Stegs, zu versehen, die bzw. der in deckelseitig zugeordnete Rastausnehmungen eingreifen, was hier in Form einer umlaufenden Nut 43 angedeutet ist.

Zum Evakuieren von Beuteln oder dergleichen ist der Vakuumpumpe 1 eine mit einem Rückschlagventil 24 bestückte Muffe 26 der in Figur 3 dargestellten Art zugeordnet, die mit einer Tülle 35 versehen ist, die in die Absaugöffnung des zu evakuierenden Beutels einführbar ist. Nach erfolgter Evakuierung wird der zur Bildung einer Absaugöffnung mit seinem Rand an der Tülle 35 aufgenommene Beutel einfach vor der Tülle 35 abgeschnürt, so daß diese wieder entfernt werden kann. Es wäre auch denkbar, die Tülle 35 als feine mit einer Einstechspitze versehene Nadel auszubilden. Mit einer derartigen Nadel kann die Wandung des zu evakuierenden Beutels einfach durchstochen werden. Sofern sich das Beutelmaterial zum Verschließen der Einstichstelle nicht von selbst stark genug zusammenzieht bzw. an seine Unterlage anlegt, kann die Einstichstelle nach erfolgter Evakuierung einfach mittels eines kurzen Klebstreifens verschlossen werden. Bei dem in Figur 3 dargestellten Ausführungsbeispiel ist auf die Kanüle 35 ein Schlauch 52 aufgesteckt, dessen vorderes Ende mit einer Nadel 53 versehen ist. Die Verwendung des in sich beweglichen Schlauchs 52 ermöglicht auch hier eine stationäre Anordnung der Vakuumpumpe 1, wodurch die Handhabung
sehr erleichtert wird, da zum Betätigen der Pumpe
lediglich eine Hand benötigt wird und somit die andere Hand frei ist.

Die im Gegentakt öffnenden bzw. schließenden Rückschlagventile 14 bzw. 24 sind im dargestellten Ausführungsbeispiel einfach als Klappenventile mit zungenförmigen Ventilklappen 36 ausgebildet. Hierzu kann
einfach eine im Bereich der Durchgangsöffnung 13 bzw.
der Absaugöffnung 25 auf den Kolben 3 aufgelegte bzw.
in die Muffe 26 eingelegte Platte 37 der in Figur 4
dargestellten Art vorgesehen sein, die zur Bildung
der zungenförmigen Ventilklappe 36 mit einem U-förmigen
Stanzschnitt 38 versehen ist. Die Platte 37 besteht
zweckmäßig aus elastischem Material, so daß unter Umständen die Eigenelastizität der Ventilklappen 36 zur
Bewerkstelligung einer Rückstellbewegung ausreicht.
Im dargestellten Ausführungsbeispiel ist zur Erhöhung
der Rückstellkraft eine eingelegte Blattfeder 39 vorgesehen. Selbstverständlich wäre es aber auch denkbar,
die mit einer Ventilklappe 36 versehene Platte 37 als
Spritzgußformling auszubilden. In einem derartigen
Fall können die Ventilklappen 36 vorteilhaft mit einem angeformten Zapfen 40 versehen sein, der in der
Schließstellung in die zugeordnete, vorzugsweise konisch ausgebildete Durchgangsöffnung 13 bzw. Absaugöffnung 25 eingreift.

Die vorstehenden Ausführungen lassen erkennen, daß
die Vakuumpumpe 1 mit ihrem Saugstutzen 20 wahlweise
mit verschiedenen Ventilmuffen zum Eingriff bringbar
ist, was einen universellen Wechseleinsatz ermöglicht.

A n s p r ü c h e

1) Haushalt-Evakuiervorrichtung für eine verschließbare Absaugöffnung aufweisende Nahrungsmittelbehälter mit einer wahlweise mit der von einem Rückschlagventil (24) beherrschten Absaugöffnung (25) des jeweils zu evakuierenden Behälters verbindbaren Vakuumpumpe (1), dadurch gekennzeichnet, daß die Vakuumpumpe (1) als Kolbenpumpe mit einem einen Saugstutzen (20) aufweisenden Zylinder (2) und einem an einer mit einem Handgriff (6) versehenen Kolbenstange (4) befestigten Kolben (3) ausgebildet ist, der eine von einem im Gegentakt zu dem die Absaugöffnung (25) kontrollierenden Rückschlagventil (24) öffnenden bzw. schließenden Rückschlagventil (14) kontrollierte Durchgangsöffnung (13) aufweist, die eine den Saugstutzen (20) aufweisende Zylinderkammer (15) mit einer mindestens eine Ausblasöffnung (17) aufweisenden Zylinderkammer (16) verbindet.

2) Haushalt-Evakuiervorrichtung nach Anspruch 1, dadurch gekennzeichnet, daß die vorzugsweise als Drosselstelle ausgebildete Ausblasöffnung (17)
im Bereich der dem Saugstutzen (20) gegenüberliegenden, von der Kolbenstange (4) durchsetzten Zylinderstirnwand (5) angeordnet ist.

3) Haushalt-Evakuiervorrichtung nach Anspruch 1
oder 2, dadurch gekennzeichnet, daß der Kolben
saugstutzenseitig einen in der saugstutzenseitigen Endlage des Kolbens (3) mit geringem Spiel
in den Saugstutzen (20) eintauchenden Ansatz (21)
aufweist und daß der Saugstutzen (20) und der zugeordnete Ansatz (21) des Kolbens (3) vorzugsweise
koaxial zur Zylinder- bzw. Kolbenachse angeordnet
sind.

4) Haushalt-Evakuiervorrichtung nach wenigstens einem der vorhergehenden Ansprüche, dadurch gekennzeichnet, daß der Kolben (3) einen die vorzugsweise exzentrisch angeordnete Durchgangsöffnung (13)
aufweisenden Scheibenkörper (7) aufweist, der gegenüber der Zylinderwandung Spiel besitzt und auf
dem ein mit Perforationen (18) versehener Teller
(9) randnah abgestützt ist, mittels dessen Rand
ein umlaufender Dichtring (8) gesichert ist und
dessen gewölbter Bogen (11) von der Kolbenstange
(4) durchsetzt und mittels einer auf diese aufgeschraubten, nachstellbaren Mutter (12) in Richtung
des den Tellerrand abstützenden Scheibenkörpers
(7) beaufschlagbar ist, der vorzugsweise aus zwei
aufeinanderliegenden Scheiben besteht, wobei an
die eine Scheibe der in den Saugstutzen (20) eintauchende Ansatz (21) angeformt ist, der das die
andere Scheibe durchsetzende und diese abstützende
Ende der Kolbenstange (4) umgreift.

5) Haushalt-Evakuiervorrichtung nach wenigstens einem der vorhergehenden Ansprüche, dadurch gekennzeichnet, daß die Rückschlagventile (14 bzw. 24) als Klappenventile mit jeweils einer zungenförmigen Ventilklappe (36) ausgebildet sind, die im Bereich des oberen Rands der Durchgangsöffnung (13) bzw. der Absaugöffnung (25) angeordnet ist und vorzugsweise mit einer als eingesetzte Blattfeder (39) ausgebildeten Rückstellfeder versehen ist.

6) Haushalt-Evakuiervorrichtung nach Anspruch 5, dadurch gekennzeichnet, daß die zungenförmige Ventilklappe (36) als Ausschnitt einer den oberen Rand der Durchgangsöffnung (13) bzw. Absaugöffnung (25) umgebenden Platte (37) aus elastischem Material ausgebildet ist und vorzugsweise mit einem der Durchgangsöffnung (13) bzw. Absaugöffnung (25) zugeordneten Zapfen (40) versehen ist.

7) Haushalt-Evakuiervorrichtung nach wenigstens einem der vorhergehenden Ansprüche, gekennzeichnet durch eine dem die Absaugöffnung (25) kontrollierenden Rückschlagventil (24) zugeordnete Muffe (26) zur wahlweisen Verbindung mit dem Saugstutzen (20).

8) Haushalt-Evakuiervorrichtung nach Anspruch 7, dadurch gekennzeichnet, daß die Muffe (26) eine mit einer Ausnehmung und dem Rückschlagventil (24) versehene Stirnwand und einen hieran angesetzten Mantel (28) aufweist, der mit einem Innengewinde versehen ist.

9) Haushalt-Evakuiervorrichtung nach Anspruch 7 oder 8, dadurch gekennzeichnet, daß die Muffe (26) nach erfolgter Evakuierung durch einen in den Mantel (28) einschraubbaren Stöpsel (33) verschließbar ist, der vorzugsweise als Hohlkörper ausgebildet ist, der eine vorzugsweise als Kreuzsteg ausgebildete Grifflasche (34) und einen mit Lüftungslöchern (42) versehenen, vorzugsweise gewölbten Boden (41) aufweist.

10) Haushalt-Evakuiervorrichtung nach wenigstens einem der vorhergehenden Ansprüche 7 bis 9, gekennzeichnet durch eine auf den Behälterdeckel (33) aufgesetzte Muffe (26) wobei eine die Stirnwand der Muffe (26) und den Behälterdeckel (23) durchsetzende Absaugöffnung (25) vorgesehen ist.

11) Haushalt-Evakuiervorrichtung nach wenigstens einem der vorhergehenden Ansprüche 7 bis 9, gekennzeichnet durch einen Behälterdeckel (29 bzw. 49) mit eingeformter Muffe (26).

12) Haushalt-Evakuiervorrichtung nach Anspruch 11, dadurch gekennzeichnet, daß der Behälterdeckel (49) außerhalb der Muffe (26) die Form einer ebenen Scheibe aufweist und auf seiner Unterseite mit einer Beschichtung (51) aus weichem Dichtmaterial versehen ist.

13) Haushalt-Evakuiervorrichtung nach wenigstens einem der vorhergehenden Ansprüche 7 bis 9, gekennzeichnet durch eine mit einer an die das Rückschlagventil (24) aufweisende Stirnwand angesetzten, vorzugsweise als Nadel ausgebildeten Tülle (35) versehene Muffe (26).

14) Haushalt-Evakuiervorrichtung nach wenigstens einem der vorhergehenden Ansprüche, <u>dadurch gekennzeichnet, daß</u> die Vakuumpumpe (1) mittels einer beweglichen Verbindungsleitung (44 bzw. 52) mit der Absaugöffnung des jeweils zu evakuierenden Behälters verbindbar ist.

15) Haushalt-Evakuiervorrichtung nach wenigstens einem der vorhergehenden Ansprüche, <u>dadurch gekennzeichnet, daß</u> die Vakuumpumpe (1) mit einer Befestigungseinrichtung (Öse 47) versehen ist.

FIG 1

0041225

FIG 4

FIG 2

FIG 3

FIG 5

FIG 6

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | CH - A5 - 614 165 (BAUM) <br> + Positionen 19,44,45 + <br> -- | 13,14 | F O4 B 33/OO |
| | CH - A - 119 043 (SCHIFFERER) <br> + Positionen 10,14,14' + <br> -- | 1,2,4, <br> 7-12 | |
| A | CH - A - 292 186 (SCHIBIG) <br> -- | 1,2 | |
| | CH - A - 585 348 (MC CULLOCH) <br> + Positionen 8,9,11 + <br> -- | 1,2,5,6 | RECHERCHIERTE SACHGEBIETE (Int. Cl.³) |
| A | US - A - 3 612 722 (NEWARD) <br> + Zusammenfassung; Fig. 1 + <br> ---- | 1,2 | B 65 B 31/OO <br> F O4 B 33/OO |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 27-O7-1981 | MELZER |

EPA form 1503.1   06.78